# EUROPÄISCHE PATENTSCHRIFT

(11) **EP 1 587 710 B1**
(45) Veröffentlichungstag und Bekanntmachung des Hinweises auf die Patenterteilung: **30.05.2007**
(21) Anmeldenummer: 03773509.9
(22) Anmeldetag: 13.10.2003
(51) Int. Cl.: B60Q 1/14

(54) **SCHEINWERFER FÜR FAHRZEUGE**
HEADLIGHT FOR VEHICLES
PHARE POUR VEHICULES

(30) Priorität: 20.01.2003 DE 10301830
(43) Veröffentlichungstag der Anmeldung: 26.10.2005
(73) Patentinhaber: ROBERT BOSCH GMBH, 70442 Stuttgart (DE)
(72) Erfinder: ESCHLER, Johannes, 71254 Ditzingen (DE); HAUK, Markus, 71696 Moeglingen (DE)
(86) Internationale Anmeldenummer: PCT/DE2003/003390
(87) Internationale Veröffentlichungsnummer: WO 2004/069592

(56) Entgegenhaltungen:
- EP-A- 0 936 107
- EP-A- 1 191 279
- FR-A- 2 800 152
- US-A1- 2001 019 482
- US-A1- 2003 007 363
- PATENT ABSTRACTS OF JAPAN vol. 2000, no. 20, 10. Juli 2001 (2001-07-10) & JP 2001 060403 A (STANLEY ELECTRIC CO LTD), 6. März 2001 (2001-03-06)

## Beschreibung

### Stand der Technik

Die Erfindung betrifft einen Scheinwerfer für Fahrzeuge, der Licht im nahen Infrarotbereich aussendet und eine Lichtquelle, die außer im Infrarotbereich auch im sichtbaren Bereich strahlt, und ein im Infrarotbereich durchlässiges Filter aufweist.

Aus DE 40 32 927 C2 ist es bekannt, den Raum vor einem Fahrzeug zur Unterstützung der Sicht im Dunklen mit Infrarot-Strahlung auszuleuchten und den damit ausgeleuchteten Bereich mit einer Kamera zu erfassen. Dabei wird der nahe Infrarotbereich ausgenutzt, weil dafür geeignete Bildsensoren zur Verfügung stehen. Die dazu verwendeten Lichtquellen weisen jedoch ein Strahlungsmaximum im nahen Infrarotbereich auf.

Es ist deshalb bei den bekannten Scheinwerfern zur Beleuchtung im nahen Infrarotbereich eine Filterung vorgesehen, welche die Aussendung von sichtbarem Licht unterbindet. Wegen einer möglichen Verwechslung mit Rücklichtern ist ein roter Eindruck von Scheinwerfern an der Frontseite des Fahrzeugs zu vermeiden, was auch in einschlägigen gesetzlichen Bestimmungen geregelt ist.

Die EP-A-936107 zeigt einen Scheinwerfer für Fahrzeuge, der Licht im nahen Infrarotbereich aussendet und eine Lichtquelle, die außer im Infrarotbereich auch im sichtbaren Bereich strahlt. Ein im Infrarotbereich durchlässiges Filter ist ebenfalls vorgesehen, bei welchem ein Übergangsbereich des Filters vom Infrarotbereich in den roten Spektralbereich des sichtbaren Bereichs hineinreicht und weitere Spektralanteile des sichtbaren Bereich gedämpft ausgesendet werden. Der dort verwendete Scheinwerfer ist nicht als Projektionsscheinwerfer ausgeführt.

EP 1191279 A2 zeigt einen Projektionsscheinwerfer, bei welchem zwischen Lichtquelle und Linse ein für das Infrarot durchlässiges Filter in einer Blende angeordnet sind. Diese Blende dient zur Erzeugung einer Hell-Dunkel-Grenze des Scheinwerfers.

Aufgabe der vorliegenden Erfindung ist es, einen Scheinwerfer zur Ausstrahlung von Strahlung im nahen Infrarotbereich vorzuschlagen, der dem austretenden Strahlungskegel eine vorteilhafte Form gibt.

### Vorteile der Erfindung

Die Aufgabe wird erfindungsgemäß durch einen Scheinwerfer gemäß Anspruch 1 gelöst.

Insbesondere wird ein besonders kleines Filter dadurch, ermöglicht dass das Filter an einer zwischen der Lichtquelle und der Linse befindlichen Blende angeordnet ist.

Der erfindungsgemäße Scheinwerfer hat den Vorteil, dass die Intensität der Infrarotstrahlung in dem jeweiligen Spektralbereich, in welchem der Bildsensor noch relativ hoch empfindlich ist, von dem Filter weitgehend ungedämpft ist und dass trotzdem kein roter Farbeindruck der Scheinwerfer entsteht. Dabei können Filter verwendet werden, welche keine extrem steilen Kanten aufweisen und entsprechend teuer sind. Vorzugsweise eignen sich Interferenzfilter.

Die Ausführungen der Erfindung im Einzelnen sowie deren Weiterbildungen hängen unter anderem davon ab, in welchem Umfang das Filter sichtbares Licht im roten Spektralbereich durchlässt und welche Anforderungen an die Farbe und Strahlungsleistung des insgesamt durchgelassenen sichtbaren Lichts gestellt werden. Deshalb ist bei einer vorteilhaften Ausführungsform der Erfindung vorgesehen, dass die weiteren Spektralanteile und der vom Filter durchgelassene Rotanteil einen Farbeindruck ergeben, der nicht rot ist.

Eine andere vorteilhafte Weiterbildung der Erfindung besteht darin, dass das Filter für die weiteren Spektralanteile durchlässig ist.

Mit dieser Weiterbildung kann der Rotanteil zwar nicht kompensiert werden, jedoch können die weiteren Spektralanteile derart überwiegen, dass die vom Filter durchgelassene Strahlung zwischen 700 µm und 780 µm vom Auge nicht als Rot wahrgenommen wird. Diese Weiterbildung kann derart ausgestaltet sein, dass die weiteren Spektralanteile und der Rotanteil den sichtbaren Bereich umfassen. Dabei ist vorzugsweise vorgesehen, dass die Transmission des Filters im kurzwelligen Bereich der weiteren Spektralanteile größer als in deren langwelligem Bereich ist.

Zur Ausleuchtung eines Fernlichtbereichs mit Hilfe Infrarotstrahlung eignen sich insbesondere sogenannte Projektions-Scheinwerfer, bei denen ähnlich einem Projektor ein Parabolspiegel und eine Linse als Objektiv vorgesehen sind. Bei einer durch JP-2000348513 A bekanntgewordenen Ausbildung eines derartigen Scheinwerfers ist das Filter zwischen dem Parabolspiegel und der Linse vorgesehen. Dort werden jedoch wegen des großen Öffnungswinkels des Strahlenganges verschiedene Durchtrittswinkel auftreten, was eine Verschiebung der Filterkennlinie in den Randbereichen des Strahlenganges gegenüber der Mitte verursacht.

Dabei kann die bestrahlte Fläche an das Gesichtsfeld eines in unterschiedlicher Höhe angebrachten Infrarot-Bildsensors dadurch angepasst werden, dass die Blende eine trapezförmige Öffnung aufweist.

### Kurze Beschreibung der Zeichnung

Ausführungsbeispiele der Erfindung sind in der Zeichnung anhand mehrerer Figuren dargestellt und in der nachfolgenden Beschreibung näher erläutert. Es zeigt:
- Fig. 1: schematisch die Darstellung eines ersten Beispiels, das nicht Teil der Erfindung ist,
- Fig. 2: ein zweites Beispiel, das nicht Teil der Erfindung ist,
- Fig. 3: ein Ausführungsbeispiel eines erfindungsgemäßen Scheinwerfers,
- Fig. 4: eine andere Ansicht des zweiten Beispiels,
- Fig. 5: verschiedene Kennlinien zur Erläuterung der Erfindung und
- Fig. 6: ein Ausführungsbeispiel einer Filterkennlinie.

### Beschreibung des Ausführungsbeispiels

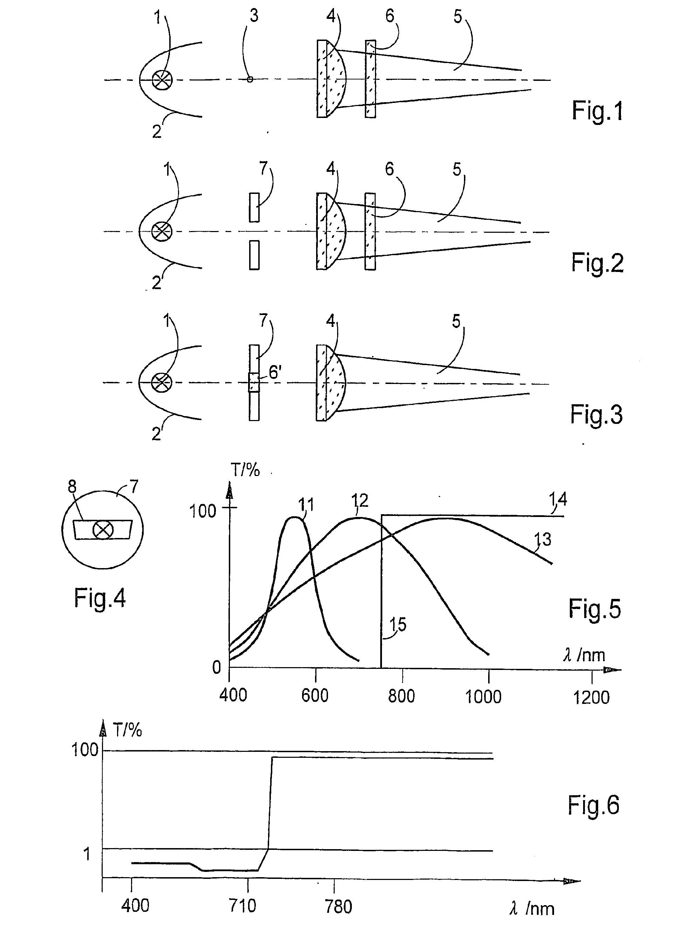

Die Figuren 1 und 2 stellen die wesentlichen Teile eines Scheinwerfers dar, der als sogenannter Projektions-Scheinwerfer ausgeführt ist. Eine Halogen-Glühlampe 1 befindet sich in einem Reflektor 2 derart, dass von der Linse 4 stark gebündelte Strahlung 5 aus dem Scheinwerfer austritt. Ein Filter 6 lässt Strahlung im nahen Infrarotbereich durch, während sichtbares Licht von dem Filter 6 unterdrückt werden soll.

Bei dem Beispiel nach den Figuren 2 und 4 ist bei 3 eine Blende 7 angeordnet mit einer Öffnung 8, welche die Form eines Trapezes aufweist, was eine entsprechende Begrenzung der Ausleuchtung des Raumes vor dem Fahrzeug ergibt, die an das Gesichtsfeld eines in unterschiedlicher Höhe angebrachten Infrarot-Bildsensors angepasst ist.

Das Ausführungsbeispiel nach Fig. 3 weist ein in der Öffnung der Blende 7 angeordnetes Filter 6' auf. Dies hat den Vorteil, dass das Filter 6' kleiner als das Filter 6 (Fig. 2) ausgeführt sein kann.

Fig. 5 zeigt verschiedene Kennlinien, deren Erläuterung zum Verständnis der Erfindung beiträgt. Und zwar sind in Abhängigkeit von der Wellenlänge Lambda relative Werte der menschlichen Augenempfindlichkeit 11, der Empfindlichkeit eines gebräuchlichen Bildsensors 12, die spektrale Verteilung 13 des Lichtes einer Halogen-Glühlampe und eine Filterkennlinie 14 dargestellt. Die Filterkennlinie 14 weist idealerweise eine extrem steile Kante 15 auf.

Die Qualität des auf einem Bildschirm dargestellten Signals wird unter anderem von der Intensität der Glühlampe, der Empfindlichkeit des Bildsensors und der Transmission des Filters bestimmt. Aufgrund des Maximums der Empfindlichkeit des Bildsensors bei sichtbarer Strahlung soll vom IR-Scheinwerfer ein möglichst nahe am sichtbaren Bereich liegender Infrarotbereich ausgesendet werden. Dies ist jedoch dadurch begrenzt, dass rot erscheinende Lichter an der Fahrzeugfront gesetzlich verboten sind. Außerdem sind Filter mit einer sehr steilen Kante 15 aufwendig in der Herstellung und entsprechend teuer.

Fig. 6 zeigt die Kennlinie eines Filters, welche im gesamten sichtbaren Bereich eine wenn auch geringe, jedoch wahrnehmbare Transmission aufweist, wobei diese im kurzwelligeren Bereich etwas erhöht ist.

Ein Filter mit einer solchen Kennlinie kann beispielsweise als optisches Interferenzfilter mit 40 bis 70 Schichten realisiert werden, die auf einem Glas- oder Kunststoffsubstrat aufgebracht sind. Die Schichten können dabei nur auf einer Seite aufgebracht oder auf beide Seiten verteilt werden. Es können auch mehrere, vorzugsweise zwei, Substrate verwendet werden. Die Transmission für Wellenlängen zwischen 400 nm und 710 nm beträgt weniger als 1%. Für Wellenlängen zwischen 780 nm und 1100 nm liegt die Transmission zwischen 80% und 100% jeweils bei Transmissionsrichtungen senkrecht zur Filteroberfläche. Der Anstieg der Flanke (Übergangsbereich) des Filters (Transmission von 10% nach 90% des Maximalwertes) erfolgt in einem Bereich von weniger als 40 nm.

## Patentansprüche

1. Scheinwerfer für Fahrzeuge, der Licht im nahen Irrfrarotbereich aussendet und eine Lichtquelle, die außer im Infrarotbereich auch im sichtbaren Bereich strahlt und ein im Infrarotbereich durchlässiges Filter aufweist, wobei ein Übergangsbereich des Filters (6) vom Infrarotbereich in den roten Spektralbereich des sichtbaren Bereichs hineinreicht und dass weitere Spektralanteile des sichtbaren Bereichs gedämpft ausgesendet werden, wobei zwischen der Lichtquelle (1) und einer Linse (4) des Scheinwerfers eine Blende (7) angeordnet ist, wodurch dem austretenden Strahlungskegel des Infrarotlichts eine vorgegebene Form gegeben wird, **dadurch gekennzeichnet, dass** das Filter (6') in einer Öffnung der Blende (7) angeordnet ist, die von der Blende vollständig umrahmt ist.

2. Scheinwerfer nach Anspruch 1, **dadurch gekennzeichnet, dass** die weiteren Spektralanteile und der vom Filter (6) durchgelassene Rotanteil einen Farbeindruck ergeben, der nicht rot ist.

3. Scheinwerfer nach einem der Ansprüche 1 oder 2, **dadurch gekennzeichnet, dass** das Filter für die weiteren Spektralanteile durchlässig ist.

4. Scheinwerfer nach Anspruch 3, **dadurch gekennzeichnet, dass** die weiteren Spektralanteile und der Rotanteil den sichtbaren Bereich umfassen.

5. Scheinwerfer nach Anspruch 4, **dadurch gekennzeichnet, dass** die Transmission des Filters (6) im kurzwelligen Bereich der weiteren Spektralanteile größer als in deren langwelligem Bereich ist.

6. Scheinwerfer nach Anspruch 1, **dadurch gekennzeichnet, dass** die Blende (7) eine trapezförmige Öffnung (8) aufweist.

## Claims

1. Headlight for vehicles which emits light in the near infrared range and a light source which irradiates both in the infrared range and in the visible range and has a filter which is transmissive in the infrared range, a transition region of the filter (6) extending from the infrared range into the red spectral range of the visible range, and further spectral components of the visible range being emitted in an attenuated fashion, a shutter (7), as a result of which a predefined shape is given to the emerging radiation cone of the infrared light, being arranged between the light source (1) and a lens (4) of the headlight, **characterized in that** the filter (6') is arranged in an opening in the shutter (7) which is completely surrounded by the shutter.

2. Headlight according to Claim 1, **characterized in that** the further spectral components and the red component which is transmitted by the filter (6) produce an impression of a colour which is not red.

3. Headlight according to one of Claims 1 or 2, **characterized in that** the filter is transmissive for the further spectral components.

4. Headlight according to Claim 3, **characterized in that** the further spectral components and the red component comprise the visible range.

5. Headlight according to Claim 4, **characterized in that** transmission of the filter (6) in the short wave range of the further spectral components is larger than in its long wave range.

6. Headlight according to Claim 1, **characterized in that** the shutter (7) has a trapezoidal opening (8).

## Revendications

1. Projecteur pour véhicules, émettant une lumière dans le proche infrarouge et une source lumineuse qui, en plus du domaine infrarouge, rayonne dans le domaine visible et présente un filtre transparent dans l'infrarouge dont une plage de recouvrement du filtre (6) s'étend du domaine infrarouge jusque dans la région du spectre rouge du domaine visible en émettant d'autres parties spectrales du domaine visible de manière atténuée, et avec entre la source lumineuse (1) et une lentille (4) du phare, un diaphragme (7) permettant de donner une forme prédéterminée au cône de rayonnement sortant de la lumière infrarouge,
**caractérisé en ce que**
le filtre (6') est monté dans une ouverture du diaphragme (7) complètement encadrée par le diaphragme.

2. Projecteur selon la revendication 1,
**caractérisé en ce que**
les autres parties spectrales et la partie rouge traversée par le filtre (6) donnent un effet de couleur non rouge.

3. Projecteur selon l'une quelconque des revendications 1 ou 2,
**caractérisé en ce que**
le filtre est transparent aux autres parties spectrales.

4. Projecteur selon la revendication 3,
**caractérisé en ce que**
les autres parties spectrales et la partie rouge entourent le domaine visible.

5. Projecteur selon la revendication 4,
**caractérisé en ce que**
la transmission du filtre (6) dans la zone de faible longueur d'onde des autres parties spectrales est plus grande que dans sa zone de grande longueur d'onde.

6. Projecteur selon la revendication 1,
**caractérisé en ce que**
le diaphragme (7) présente une ouverture en forme de trapèze (8).
